# EUROPEAN PATENT SPECIFICATION

(11) **EP 1 932 614 B1**
(45) Date of publication and mention of the grant of the patent: **01.09.2010**
(21) Application number: 07022839.0
(22) Date of filing: 26.11.2007
(51) Int. Cl.: B23K 11/14

(54) **Method for connecting a pair of sheets**
Verfahren zum Verbinden zweier Bleche
Procédé pour raccorder deux tôles

(30) Priority: 15.12.2006 IT TO20060889
(43) Date of publication of application: 18.06.2008
(73) Proprietor: KGR S.p.A., 10032 Brandizzo (Torino) (IT)
(72) Inventor: Simioli, Marco, 10040 Almese (Torino) (IT)
(74) Representative: Cian, Paolo

(56) References cited:
- EP-A- 1 038 627
- JP-A- 11 267 851

## Description

The present invention refers in general to a method for connecting sheet elements, which comprises a resistance welding operation, particularly a welding of the so-called projection type, in which one of the sheets to be welded has one or more projections or indentations for concentrating the welding current.

For connecting two sheet elements by means of projection welding, a plurality of indentations are formed beforehand in one of the two sheets, so as to project from the plane thereof. The indentations are formed by a pressing operation, such as a cold punching operation, in a zone of the sheet that will become hidden at the sight at the end of the welding operation. During the welding, the indentations undergo a pressure and heat owing to the flow of a current, until the fusion thereof is achieved, so that their material merges with the other sheet in order to make the connection.

This connection method involving the execution of resistance weldings is frequently used in the automotive and the white goods industry when aesthetical characteristics of high quality are required, usually when the sheets to be connected must lack of any visible deformation or surface imperfection after welding. In the automotive field, this kind of welding is typically used for assembling motor vehicles movable parts constituted by composite panels, for example doors, bonnet doors and boot lids, which comprise an outer covering panel and an inner reinforcing structure or skeleton.

After having formed the indentations on a sheet and before the welding operation is carried out, the covering panel is connected to the skeleton by means of a peripheral seaming operation, by folding an edge thereof along all the outer edge of the skeleton, in such a manner that the geometry of the composite panel is permanently defined during the execution of the welding.

In particular, the invention relates to a connection method of the type defined in the preamble of appended claim 1.

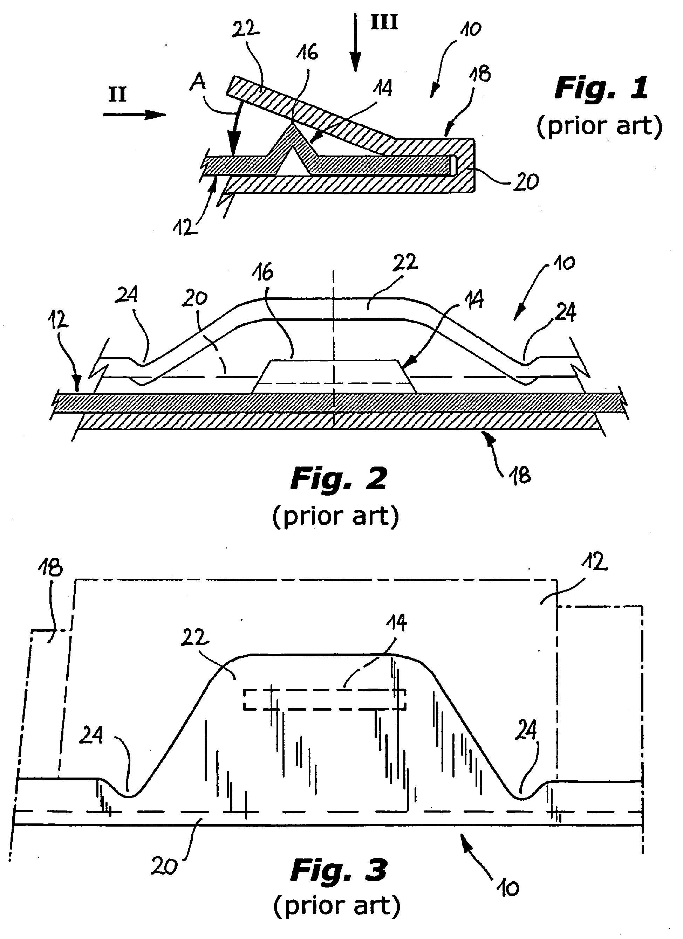

A method for connecting sheets of the type mentioned above, is known from EP-A-1 038 627 and is schematically shown in figures 1 to 3 of the annexed drawings, which represent a portion of the sheets used during the relevant method. In particular, figure 1 is a side sectional view of two sheets coupled by seaming in the method according to the prior art, before the projection welding is carried out, figure 2 is an elevational view of the sheets from arrow II of figure 1, and figure 3 is a top elevational view from arrow III of figure 1, at the end of the welding.

With reference to these figures and to the known method, a first sheet, which usually consists of the skeleton of a composite panel 10, is indicated 12. A plurality of indentations 14, having a rectilinear and elongated shape and a generally triangular cross-section (only one of which can be seen in figures 1 to 3), are formed in the sheet 12, each of which has a rectilinear top crest 16.

A second sheet, indicated 18, is associated to the sheet 12 in view of the fastening thereof by welding. In the most common case, a layer of adhesive material is interposed between the sheets 12 and 18, typically a thermosetting plastic material (not shown in the figures). The sheets 12 and 18 are preliminarily connected by means of a mechanical seaming operation during which a portion 20 of the sheet 18 is folded so as to surround the peripheral edge of the sheet 12. The edge portion of the second sheet is provided with a plurality of tongues 22 (only one of which can be seen in figures 1 to 3) which has a rectangular or trapezoidal shape, the edges of which are rounded off or radiused, each of which is formed in a position adapted to be arranged close to a respective indentation 14 in the coupled and seamed condition of the two sheets 12 and 18. Usually, a pair of recesses 24 must be formed at the base of each tongue 22 so as to avoid that the sheet 18, in the zone adjacent to it, undergoes a deformation and crinkle when the tongue 22 is pressed in order to bring it into contact with the respective indentation 14 of the sheet 12. The forming of these recesses 24, besides requiring an additional operation, is usually complex because the shape thereof may reveal to be critical in order to assure a satisfactory contact between the tongues 22 and the respective indentations 14.

Then, the welding operation is executed by welding means which comprise a welding electrode (not shown, being of a per se known type) resting on the outer face of a respective tongue 22 and carrying out a pressure action on it in order to bring it in a close contact with the top crest 16 of the indentation 14, according to a movement schematically indicated by arrow A of figure 1. Then, a current impulse, usually of a short duration and with a high intensity, is fed between the welding electrode and another electrode, lasting in the meanwhile the pressure action, in such a manner that the fusion of the indentation 14 is achieved as well as the penetration thereof into the face of the tongue 22 which faces the sheet 12. At the end of the welding operation (figure 3), the tongue 22 will be superimposed in parallel to the sheet 12 and permanently fastened to it.

This known connection method has however the disadvantage that it requires a complex and difficult setup in order to avoid that the two sheets to be welded may endure deformations during the seaming and welding steps. In the most general case, the setup step comprises also forming the recesses at the base of the tongues of the second sheet, whose optimal shape is often difficult to be determined, so that it is necessary to turn to highly skilled operators, with a resulting increase of the costs for actuating the method and therefore of the production costs.

With the aim of overcoming the drawbacks of the connection method according to the prior art, the subject of the invention is a method as claimed.

The method according to the invention starts from the consideration that many setup difficulties of the known connection method derives from the particular shape of the indentation commonly used, whose rectilinear extension does not allow always a correct contact of the other sheet with the respective tongue, owing to unavoidable clearances or geometric imperfections of the shape of the two sheets.

By virtue of the present invention, the arched shape of the indentation which characterizes it, allows always to obtain a zone of optimal contact between the top crest of the indentation with the internal surface of the tongue to be welded, and assures therefore an optimal reliability of the connection by welding a pair of sheets, in particular without requiring any complex setup of the system.

According to a preferred feature of the invention, the tongue has an arched shape which corresponds to that of the indentation.

By virtue of such a feature, the contact surface between the indentation and the respective tongue is increased so that an improved mechanical connection of the welding can be obtained, that has proven to have "structural" features falling with a good margin within the safety limits in the case of impact, as a result of tests performed by the Applicant. Moreover, according to the invention, it can be advantageously avoided making the recesses at the base of the tongues, since the particular shape of the indentations and the tongues allows to obtain an optimal contact between the two sheets in all conditions.

The invention will be better clarified by the following detailed description, made with reference to the appended drawings which are provided as a non-limitative example, in which:
- figure 1 is a schematic side and sectional view of two sheets coupled by seaming in a method according to the prior art, before executing a projection welding,
- figure 2 is an elevational view of the sheets of figure 1 from arrow II,
- figure 3 is a schematic top elevational view, from arrow III of figure 1, at the end of the execution of the projection welding in the method according to the prior art,
- figure 4 is a schematic perspective view of two sheets intended to be fastened by a method according to the present invention, and
- figure 5 is a partially sectioned view similar to figure 4, which shows two sheets before the execution of the welding step of the method of the invention.

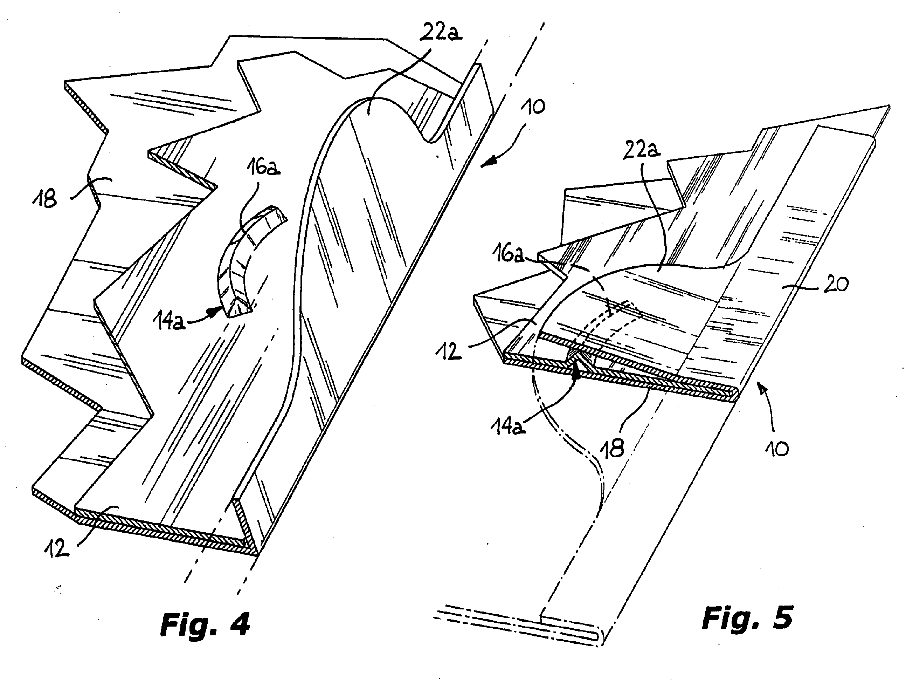

With particular reference to figures 4 and 5, in which numeral references analogous to those of figures 1 to 3 have been used to indicate parts similar to them, a composite panel 10 comprises a pair of sheets 12 and 18 to be fastened to each other by a resistance projection welding process.

A series of elongated indentations 14a (only one of which is shown in figures 4 and 5), is formed in proximity to the edge of the panel 12, each of which has an arched or bent shape with a substantially triangular cross-section and a curvilinear top crest 16a.

A series of tongues 22a (only one of which can be seen in figures 4 and 5) extends from the edge of the panel 18, each of which has an arched profile corresponding to that of the indentations 14a. The tongues 22a are formed in the panel 18 at positions which correspond to those of the indentations 14a, in the condition of the two sheets 12 and 18 reciprocally connected by seaming. In particular, the side base portions of the tongues 22a are radiused with the remainder of the sheet 18 without forming any recess, which considerably simplifies making of the tongues 22a.

Preferably, both the indentations 14a and the tongues 22a are shaped as an arc of circle, whose respective concavities face the edges of the sheets 12 and 18. In other words, the centers of the circumferential portions which define the shape of the indentations 14a and of the tongues 22a, are arranged on the side of the indentations 14a and the tongues 22a which faces the outer edges of the sheets 12, 18, and which faces therefore the outside of the composite panel 10.

After the sheets 12 and 18 have been coupled (figure 4) and preliminarily connected by a mechanical seaming operation, during which a portion 20 of the sheet 18 has been deformed by bending (figure 5) so as to surround the peripheral edge of the panel 12, the two sheets 12 and 18 undergo a real welding operation. During the welding, a welding electrode (not shown) is brought to rest on the outer face of a respective tongue 22a in order to compress it on the indentation 14a, until it reaches the position of figure 5. From this point onwards, the welding proceeds by feeding a current impulse between the welding electrode and a second electrode (not shown) through the sheets 12 and 18, while the welding electrode continues to carry out a pressure action on the tongue 22a, until the complete welding of the sheets 12 and 18 is obtained.

The method of the invention allows to provide optimal results in the execution of projection weldings both of the direct and the indirect type. In the first case, the welding current is transmitted between the welding electrode arranged on the tongue 22a (with reference to the figures) and the second electrode which makes contact with the sheet 18 at the opposite side of the tongue 22a with respect to the sheet 12, while in the second case the welding current is discharged by the second electrode consisting of an earth electrode which rests on the face of the sheet 12 facing the side of the tongue 22a.

Of course, the geometrical dimensions and the number of arched indentations 14a and of relevant tongues 22a will vary as a function of both the material and the thickness of the sheets 12 and 18, as well as of the kind of surface treatments used.

## Claims

1. Method for connecting at least two sheets (12, 18), comprising the steps of:
- forming in a first sheet (12) a series of indentations (14a) having a substantially triangular cross-section, which project from the plane of the respective sheet (12),
- forming in a second sheet (18) a series of tongues (22a) which extend from a peripheral edge therof,
- overlapping the first sheet (12) on the second sheet (18),
- connecting the two sheets (12, 18) by seaming, folding a portion (20) of the second sheet (18) on the edge of the first sheet (12),
- compressing the tongues (22a) of the second sheet (18) against the indentations (14a) of the first sheet (12), by using pressure means, and
- welding the sheets (12, 18) in proximity to the respective indentations (14a) and the relevant tongues (22a) by means of a projection welding method, by using welding means adapted to deliver a current impulse,
**characterized in that** said indentations (14a) have an elongated and arched shape, so that they extend along a bent path.

2. Method according to claim 1, **characterized in that** said tongues (22a) have an arched profile whose shape corresponds to that of the respective indentation (14a).

3. Method according to claim 1 or 2, **characterized in that** said tongues (22a) are radiused to the respective sheet (18) without forming any recess at the sides of the base portion thereof.

4. Method according to any one of claims 1 to 3, **characterized in that** the indentations (14a) and the tongues (22a) are shaped as an arc of circle.

5. Method according to claim 4, **characterized in that** the centers of the circumferences defining the arched shape of the indentations (14a) and of the tongues (22a) are arranged on the side of the indentations (14a) and of the tongues (22a) facing the outer edges of the respective sheets (12, 18).

6. Method according to claim 5, **characterized in that** the welding step comprises the execution of an indirect projection welding process, and **in that** the welding means comprise a welding electrode adapted to rest on said tongue (22a) on the side opposite to the respective indentation (14a) of the first sheet (12), and at least a earth electrode adapted to rest on the first sheet (12) in order to close an electric circuit through said first and second sheets (12, 18) while the welding is carried out.

7. Method according to claim 5, **characterized in that** the welding step comprises the execution of a directed projection welding process, and **in that** the welding means comprise a pair of welding electrodes respectively adapted to rest on said tongue (22a) on the side opposite to the respective indentation (14a) of the first sheet (12), and on the second sheet (18) on the side thereof opposite to the first sheet (12) with respect to said tongue (22a), so that an electric circuit is closed through said first and second sheets (12, 18) while the welding is carried out.

8. Method according to any one of claims 1 to 7, **characterized in that** a polymeric adhesive, preferably of the thermosetting type, is interposed between edge portions of the first sheet (12) and of the second sheet (18).

## Patentansprüche

1. Verfahren zum Verbinden von wenigstens zwei Blechen (12, 18) mit den folgenden Schritten:
- Bilden einer Reihe von Buckeln (14a) von im wesentlichen dreieckigem Querschnitt in einem ersten Blech (12), die über die Ebene dieses Bleches (12) vorstehen,
- Bilden einer Reihe von Zungen (22a) an einem zweiten Blech (18), die von dessen umlaufender Kante abstehen,
- Auflegen des ersten Bleches (12) auf das zweite Blech (18),
- Verbinden der beiden Bleche (18, 22) durch Falzen eines Abschnittes (20) des zweiten Bleches (18) um den Rand des ersten Bleches (12),
- Drücken der Zungen (22a) des zweiten Bleches (18) gegen die Buckel (14a) des ersten Bleches (12) mit Hilfe von Druckmitteln,
- Verschweißen der Bleche (12, 18) im Bereich der Buckel (14a) und der zugehörigen Zungen (22a) mittels eines Buckelschweißverfahrens unter Verwendung von Schweißmitteln, die einen Stromimpuls erzeugen,
**dadurch gekennzeichnet, dass** die Buckel (14a) eine längliche Bogenform haben und sich dadurch auf einer gekrümmten Bahn erstrecken.

2. Verfahren nach Anspruch 1, **dadurch gekennzeichnet, dass** die Zungen (22a) ein bogenförmiges Profil haben, dessen Form der Form der zugehörigen Buckel (14a) entspricht.

3. Verfahren nach Anspruch 1 oder 2, **dadurch gekennzeichnet, dass** die Zungen (22a) zu dem zugehörigen Blech (18) hin gerundet sind, ohne auf beiden Seiten der Grundlinie der jeweiligen Zunge einen Einschnitt zu bilden.

4. Verfahren nach einem der Ansprüche 1 bis 3, **dadurch gekennzeichnet, dass** die Buckel (14a) und die Zungen (22a) eine Kreisbogenform haben.

5. Verfahren nach Anspruch 4, **dadurch gekennzeichnet, dass** die Mittelpunkte der Kreisbogen, welche die Kreisbogenform der Buckel (14a) und der Zungen (22a) definieren, auf der Seite der Buckel (14a) und der Zungen (22a) liegen, die den Außenkanten der zugehörigen Bleche (12, 18) zugewandt ist.

6. Verfahren nach Anspruch 5, **dadurch gekennzeichnet, dass** beim Schweißen ein indirektes Buckelschweißen durchgeführt wird und dass die Schweißmittel eine Schweißelektrode umfassen, die auf der Seite der Zunge (22a) aufliegt, die von dem Buckel (14a) des ersten Bleches (12) abgewandt ist, sowie wenigstens eine Masseelektrode, die an dem ersten Blech (12) zur Anlage kommt und dadurch während des Schweißvorgangs den elektrischen Kreis über die beiden Bleche (12, 18) schließt.

7. Verfahren nach Anspruch 5, **dadurch gekennzeichnet, dass** beim Schweißen ein direktes Buckelschweißen durchgeführt wird und dass die Schweißmittel zwei Schweißelektroden umfassen, von denen eine auf der Seite der Zunge (22a) aufliegt, die von dem Buckel (14a) des ersten Bleches (12) abgewandt ist, während die zweite auf dem zweiten Blech (18) auf dessen vom ersten Blech (12) bezüglich der Zunge (22a) abgewandten Seite zur Anlage kommt, so dass während des Schweißvorgangs der elektrische Kreis über die beiden Bleche (12, 18) geschlossen wird.

8. Verfahren nach einem der Ansprüche 1 bis 7, **dadurch gekennzeichnet, dass** zwischen die Randbereiche des ersten Bleches (12) und des zweiten Bleches (18) ein Polymerisationskleber eingebracht wird, vorzugsweise ein bei Wärme aushärtbarer Kleber.

## Revendications

1. Procédé pour raccorder au moins deux tôles (12, 18), comportant les étapes consistant à :
- former dans une première tôle (12) d'une série d'indentations (14a) ayant une section transversale essentiellement triangulaire, qui font saillie du plan de la tôle (12) respective,
- former dans une deuxième tôle (18) une série de languettes (22a) qui s'étendent depuis un bord périphérique de celle-ci,
- amener la première tôle (12) en recouvrement de la deuxième tôle (18),
- relier les deux tôles (12, 18) en sertissant et repliant une partie (20) de la deuxième tôle (18) sur le bord de la première tôle (12),
- comprimer les languettes (22a) de la deuxième tôle (18) contre les indentations (14a) de la première tôle (12), en employant des moyens de pression, et
- souder les tôles (12, 18) à proximité des indentations respectives (14a) et des languettes (22a) correspondantes au moyen d'un procédé de soudure par bossage, en employant des moyens de soudure adaptés à fournir une impulsion de courant,
**caractérisé en ce que** les indentations (14a) ont une forme allongée et arquée, de sorte qu'elles s'étendent le long d'un chemin coudé.

2. Procédé selon la revendication 1, **caractérisé en ce que** lesdites languettes (22a) ont un profil arqué dont la forme correspond à celle de l'indentation (14a) respective.

3. Procédé selon la revendication 1 ou la revendication 2, **caractérisé en ce que** lesdites languettes (22a) rayonnent par rapport à la tôle (18) respective sans former aucune cavité sur les côtés de la partie de base de celle-ci.

4. Procédé selon l'une quelconque des revendications 1 à 3, **caractérisé en ce que** les indentations (14a) et les languettes (22a) sont formées en arc de cercle.

5. Procédé selon la revendication 4, **caractérisée en ce que** les centres des circonférences définissant la forme arquée des indentations (14a) et des languettes (22a) sont situés sur le côté des indentations (14a) et des languettes (22a) faisant face aux bords externes des tôles respectives (12, 18).

6. Procédé selon la revendication 5, **caractérisée en ce que** l'étape de soudure comporte l'exécution d'un procédé indirect de soudure par bossage, et **en ce que** les moyens de soudure comportent une électrode de soudure adaptée pour reposer sur ladite languette (22a) en vis-à-vis de l'indentation (14a) respective de la première tôle (12), et au moins une électrode de terre adaptée pour reposer sur la première tôle (12) de manière à fermer un circuit électrique incluant lesdites premières et deuxièmes tôles (12, 18) pendant que la soudure est effectuée.

7. Procédé selon la revendication 5, **caractérisée en ce que** l'étape de soudure comporte l'exécution d'un procédé dirigé de soudure par bossage, et **en ce que** les moyens de soudure comportent une paire d'électrodes de soudure respectivement adaptées pour reposer sur ladite languette (22a) sur le côté en vis-à-vis de l'indentation (14a) respective de la première tôle (12) et sur la deuxième tôle (18), sur le côté de celle-ci situé en vis-à-vis de la première tôle (12) par rapport à ladite languette (22a), de sorte qu'un circuit électrique soit fermé, incluant lesdites premières et deuxièmes tôles (12, 18), pendant que la soudure est effectuée.

8. Procédé selon l'une quelconque des revendications 1 à 7, **caractérisé en ce qu'**un adhésif polymère, de préférence du type thermodurcissable, est interposé entre des parties de bord de la première tôle (12) et de la deuxième tôle (18).
